(19) Europäisches Patentamt
European Patent Office
Office européen des brevets

(11) Veröffentlichungsnummer: **0 007 029**
**B1**

(12) # EUROPÄISCHE PATENTSCHRIFT

(45) Veröffentlichungstag der Patentschrift: **20.01.82**

(51) Int. Cl.³: **C 07 F 9/40,** C 07 F 9/65 // C09B43/40, C09B69/00

(21) Anmeldenummer: **79102104.1**

(22) Anmeldetag: **25.06.79**

(54) **Verfahren zur Herstellung von aromatischen Phosphorverbindungen.**

(30) Priorität: **06.07.78 DE 2829710**

(43) Veröffentlichungstag der Anmeldung: **23.01.80 Patentblatt 80/2**

(45) Bekanntmachung des Hinweises auf die Patenterteilung: **20.01.82 Patentblatt 82/3**

(84) Benannte Vertragsstaaten: **CH DE FR GB**

(56) Entgegenhaltungen:
**DE-A-2 706 854**
**DE-A-2 717 091**
**FR-A-2 089 657**
**US-A-4 113 807**
**US-A-3 493 639**

**TETRAHEDRON, Vol. 23, 1967, Pergamon Press Ltd., GB, P. TAVS et al.: «Zur Herstellung aromatischer Phosphonsäureester aus Arylhalogeniden und Trialkylphosphiten», Seiten 4677–4679**

(73) Patentinhaber: **BAYER AG, Zentralbereich Patente, Marken und Lizenzen, D-5090 Leverkusen 1, Bayerwerk (DE)**

(72) Erfinder: **Schallner, Otto, Dr., Andreas-Gryphius-Strasse 22, D-5000 Köln 80 (DE)**
Erfinder: **Hamprecht, Rainer, Dr., Saarstrasse 4, D-5000 Köln 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

EP 0 007 029 B1

# Verfahren zur Herstellung von aromatischen Phosphorverbindungen

Gegenstand der Erfindung ist ein verbessertes Verfahren zur Herstellung von phosphorhaltigen Verbindungen der Formel

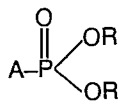
(I)

durch Umsetzung von Phosphorverbindungen der Formel

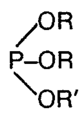
(II)

mit aktivierten aromatischen Halogenverbindungen der Formel

A–Hal (III)

in Gegenwart von Kupfer oder Kupferverbindungen, wobei
A für einen durch Substituenten mit positiven Hammet'schen $\sigma$-para-Werten substituierten aromatischen Rest,
Hal für Halogen, vorzugsweise Cl, Br und J,
R für einen gegebenenfalls substituierten Alkyl-, Cyclohexyl- oder Phenylrest,
R' für H oder R stehen.

Das neue Verfahren ist dadurch gekennzeichnet, dass man die Reaktion in Wasser bei pH 6–9 in Gegenwart von Kupfer(II)-Salzen durchführt.

Es ist überraschend, dass diese bisher nur in organischen Lösungsmitteln praktizierte Umsetzung in wässrigem Medium glatt und ohne Komplikationen verläuft, da aus DE-OS 2 706 854 und 2 717 091 bekannt war, dass in Gegenwart von Wasser unerwünschte Nebenreaktionen eintreten.

Geeignete Arylreste A sind Reste der Benzol-, Naphthalin-, Diphenyl- und Anthracen- (insbesondere Anthrachinon-) -Reihe, die in der angegebenen Weise substituiert sind.

Geeignete aktivierende Substituenten in A sind vor allem solche mit $\sigma$-para-Werten von mindestens +0,3, vorzugsweise +0,5. Beispielhaft seien genannt $NO_2$, CN, Alkylsulfonyl, Alkoxycarbonyl, Alkylcarbonyl, Arylazo usw., die vorzugsweise in ortho- oder/und para-Stellung zum Halogenatom stehen.

Geeignete Reste R sind:
a) $C_1$–$C_6$-Alkylreste, die gegebenenfalls durch $C_1$–$C_4$-Alkoxy, Phenyl oder CN substituiert sind,
b) Cyclohexylreste, die gegebenenfalls durch Methyl oder Cl substituiert sind sowie
c) Phenylreste, die gegebenenfalls durch $C_1$–$C_4$-Alkyl, $C_1$–$C_4$-Alkoxy, $NO_2$ oder Cl substituiert sind.

Die nach dem neuen Verfahren erhältlichen Produkte sind wertvolle, bekannte Insektizide sowie Ausgangsstoffe zur Herstellung von Polyurethanen (vgl. DE-OC 2 421 070).

Besonders eignet sich das erfindungsgemässe Verfahren zur Herstellung von Azofarbstoffen, die in der Diazo- oder Kupplungskomponente orthoständig zur Azobrücke mindestens einen Rest der Formel

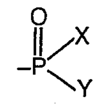

aufweisen.

Die sulfogruppenfreien Vertreter solcher Farbstoffe entsprechen vorzugsweise der Formel

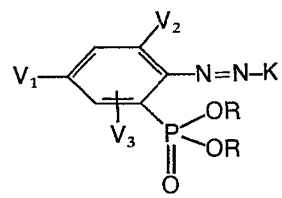
(IV)

worin
K den Rest einer Kupplungskomponente und
$V_1$–$V_3$ unabhängig voneinander für Wasserstoff oder einen in der Farbstoffchemie üblichen nichtionischen Substituenten bedeuten, und
R die obengenannte Bedeutung haben.

Unter diesen Farbstoffen sind wiederum solche der angegebenen Formel bevorzugt, worin
K einen Rest der Enol-, Phyrazolon- und vor allem der Benzol- oder Naphthalinreihe und
$V_1$–$V_3$ H, Cl, Br, $C_1$–$C_4$-Alkyl, $NO_2$, CN, Phenylazo, $C_1$–$C_4$-Alkoxy, $C_1$–$C_4$-Alkoxycarbonyl, $C_1$–$C_4$-Alkylcarbonyl, NHCO–$C_1$–$C_4$-Alkyl oder –$SO_2N(C_1$–$C_4$-Alkyl$)_2$ und
R $C_1$–$C_4$-Alkyl, Benzyl, Phenyl oder Phenyläthyl bedeuten.

Besonders bevorzugte Reste K sind solche der Formel IX gemäss DE-AS 2 456 495, Spalte 5.

Geeignete enolische Kupplungskomponenten sind offenkettig (z.B. Acetessigesterderivate) oder cyclisch (z.B. Barbitursäureder.).

Bevorzugte sulfogruppenhaltige Farbstoffe entsprechen der Formel IV, worin K für einen Hydroxy-, Amino- oder Hydroxy/Aminonaphthalinsulfonsäurerest und $V_1$–$V_3$ auch für –$SO_3H$, –COOH oder –$PO_3H_2$ stehen.

Weiterhin können die Verfahrensprodukte auch Ammoniumgruppen enthalten.

Als Ausgangsmaterialien zur Herstellung dieser Farbstoffe nach dem erfindungsgemässen Verfahren dienen entsprechende ortho-Halogenazofarbstoffe, insbesondere solche der Formel

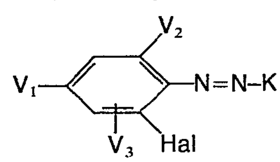
(V)

worin die angegebenen Reste die obengenannte Bedeutung haben.

Diese Verbindungen sind allgemein bekannt (vgl. z.B. US-PS 3 876 621 und 3 962 209).

Auch die Phosphorverbindungen der Formel II sind bekannt (vgl. die obengenannten deutschen Offenlegungsschriften).

Die Umsetzung von II mit III bzw. V in Wasser erfolgt im allgemeinen bei 10–130 vorzugsweise 20–100 °C und pH-Werten von 6–9. Im allgemeinen setzt man äquivalente Mengen von II und III bzw. V ein, vorzugsweise verwendet man jedoch einen 1,5–3fachen Überschuss an II.

Zur Beschleunigung der Reaktion, insbesondere beim Einsatz von wasserunlöslichen Verbindungen III bzw. V, empfiehlt sich der Zusatz von Emulgatoren und/oder Phasentransferkatalysatoren. Auch die Verwendung von mit Wasser mischbaren, aprotischen organischen Lösungsmitteln in Mengen bis zu 5% (bezogen auf den Wasseranteil) kann mitunter von Nutzen sein.

Geeignete Lösungsmittel, die als Aktivatoren der Reaktion dienen können, sind insbesondere solche basischer Natur, wie z.B. Pyridin, Triäthylamin, 2,3,3-Trimethylindolenin u.a. tertiäre Amine.

Auch die Kupferkatalysatoren werden im allgemeinen in äquivalenten Mengen – bezogen auf auszutauschendes Halogen – eingesetzt. Häufig sind jedoch auch katalytische Mengen ausreichend.

Geeignete Kupferverbindungen sind in den obengenannten deutschen Offenlegungsschriften beschrieben. Vorzugsweise werden Cu-II-Salze, wie Cu-II-sulfat und Cu-II-acetat eingesetzt.

Die Reaktionszeiten können innerhalb eines breiten Intervalls schwanken. Im allgemeinen reichen 1 bis 12 Stunden bis zur Beendigung der Reaktion aus.

Das neue Verfahren zeichnet sich gegenüber den bekannten «Lösungsmittelverfahren» bei etwa gleichen Ausbeuten durch geringere Kosten infolge geringeren sicherheitstechnischen Aufwands und Fortfalls der Lösungsmittelrückgewinnungsanlagen aus.

Es wird anhand der folgenden Beispiele näher erläutert, dabei bedeuten «Teile» Gewichtsteile.

Beispiel 1 (Methode A):

27 Teile 1-(2'-Brom-4'-nitrophenylazo)-2-hydroxy-6-naphthylsulfonsäure-Natriumsalz werden mit 130 ml Wasser verrührt und mit 20 Teilen Kupfersulfat-5-hydrat in 70 Teilen Wasser versetzt. Man stellt den pH-Wert auf 7–8 und rührt eine Stunde. Danach werden bei pH 8 35 Teile Phosphorigsäurediäthylester zugetropft. Man rührt 4 Stunden bei Raumtemperatur nach und säuert mit Salzsäure an. Der Niederschlag wird abgesaugt, gewaschen, getrocknet und ergibt 23 Teile

Diäthyl-5-nitro-2-[2'-hydroxy-6'-sulfonaphthylazo]-phenylphosphonat,

nahezu frei von Ausgangsverbindungen und Nebenprodukten.

Beispiel 2 (Methode B):

21 Teile 3-Acetylamino-4-(2'-brom-4',6'-dinitro-phenylazo)-N,N-diäthylanilin werden mit 250 Teilen Wasser, 2 Teilen Emulgator auf Polyäther-Basis und 2 Teilen 2,3,3-Trimethylindolenin verrührt. Man setzt 15 Teile Kupfersulfat-5-hydrat in 50 Teilen Wasser zu und erwärmt auf 80 °C. In dieser Mischung werden bei einem pH-Wert von 8 25 Teile Diäthylphosphit bzw. 31 Teile Triäthylphosphit gegeben.

Nach 3–4 h wird die Mischung auf Raumtemperatur abgekühlt und mit Salzsäure auf einen pH-Wert von 0,5–1 gebracht. Man rührt ca. 30 Minuten, filtriert den Farbstoff ab, wäscht mit Wasser und trocknet. Man erhält 19,7 Teile

Diäthyl-3,5-dinitro-2-{2'-acetylamino-4'-N,N-diäthylaminophenylazo}-phenylphosphonat,

verunreinigt mit geringen Mengen an Ausgangsprodukt und Nebenprodukten.

Verfährt man wie bei den beiden vorangegangenen Beispielen, stehen jedoch die in nachfolgender Tabelle aufgeführten Ausgangsmaterialien unter den angegebenen Bedingungen, so erhält man in etwa gleichen Ausbeuten und Qualitäten die dort genannten Reaktionsprodukte.

Tabelle

| | Halogen-Verbindung | Phosphorverbindung der Formel Z–PXY | Reaktionstemperatur | Methode | Reaktionsprodukt 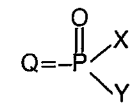 |
|---|---|---|---|---|---|
| 1 | 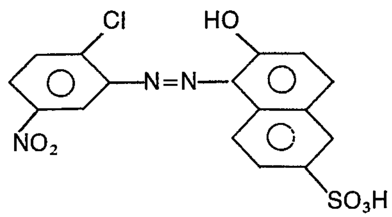 | Z=OH<br>Y=X=$OC_2H_5$ | 40 °C | A | 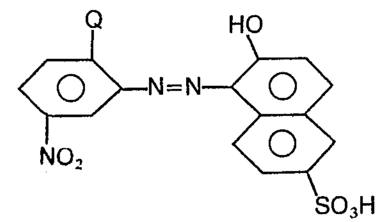 |
| 2 | 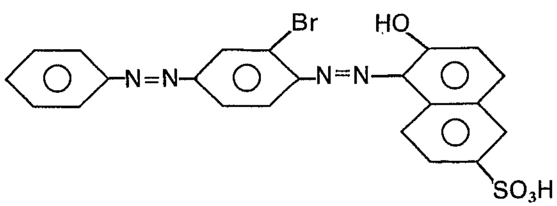 | Z=OH<br>Y=X=$OC_2H_5$ | 40 °C | A | 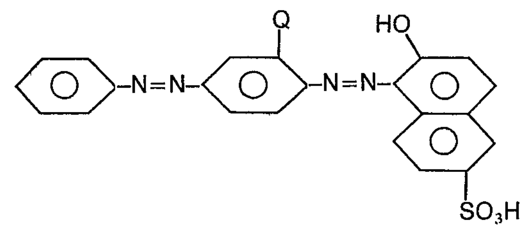 |
| 3 | 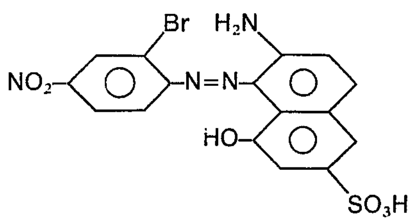 | Z=OH<br>Y=X=$OC_2H_5$ | 60 °C | A | 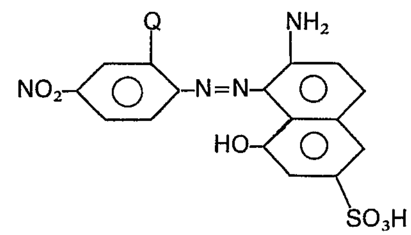 |
| 4 | 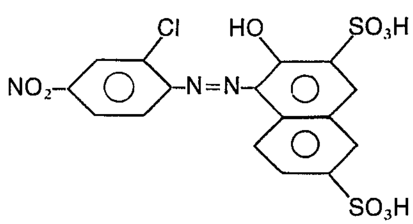 | Z=OH<br>X=Y=$OC_2H_5$ | 60 °C | A | 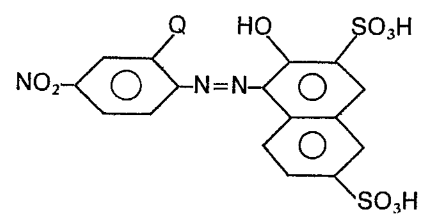 |

| | | | | | |
|---|---|---|---|---|---|
| 5 | 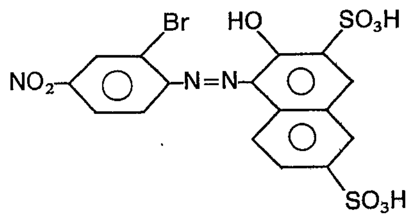 | Z=OH<br>X=Y=$OC_2H_5$ | 20 °C | A | 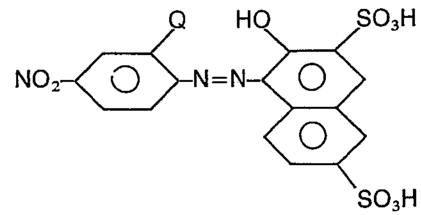 |
| 6 | 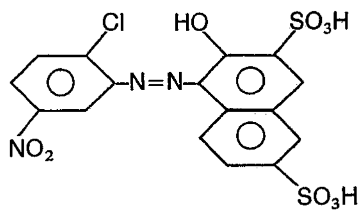 | Z=OH<br>X=Y=$OC_2H_5$ | 40 °C | A | 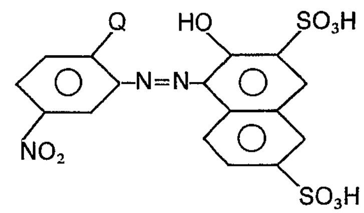 |
| 7 | 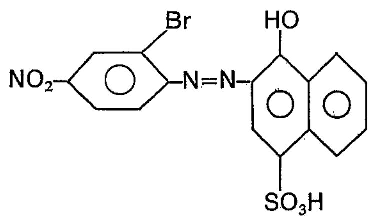 | Z=OH<br>X=Y=$OC_2H_5$ | 40 °C | A | 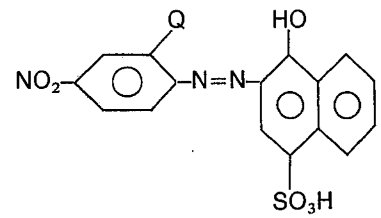 |
| 8 | 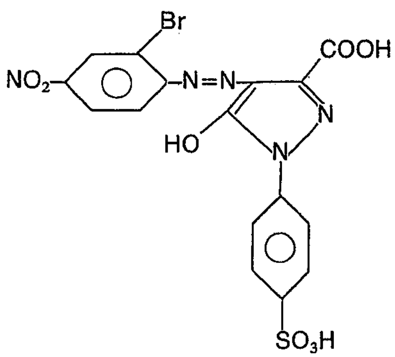 | Z=OH<br>X=Y=$OC_2H_5$ | 20 °C | A | 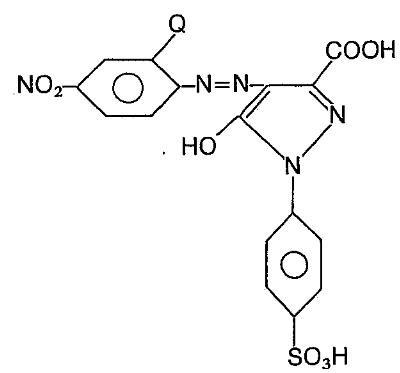 |

Tabelle (Fortsetzung)

| | Halogen-Verbindung | Phosphorverbindung der Formel Z–PXY | Reaktionstemperatur | Methode | Reaktionsprodukt 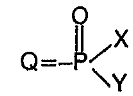 |
|---|---|---|---|---|---|
| 9 | 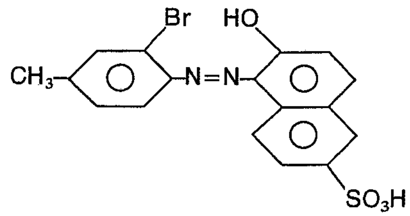 | Z=OH<br>X=Y=$OC_2H_5$ | 40 °C | A | 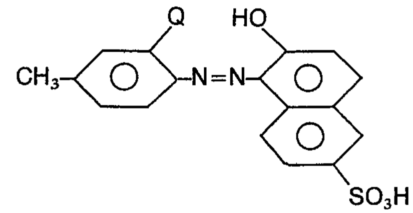 |
| 10 | 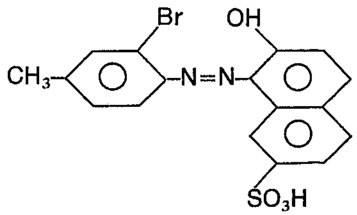 | Z=OH<br>X=Y=$OC_2H_5$ | 40 °C | A | 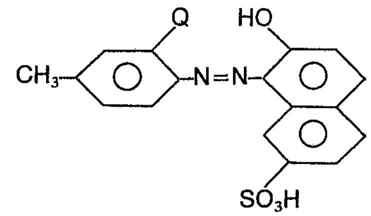 |
| 11 | 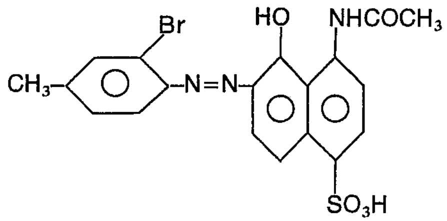 | Z=OH<br>X=Y=$OC_2H_5$ | 40 °C | A | 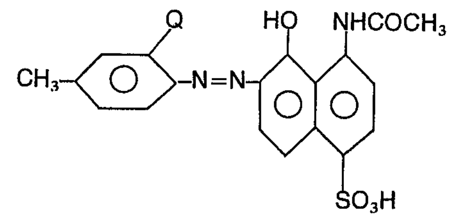 |
| 12 | 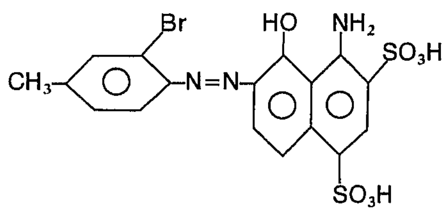 | Z=OH<br>X=Y=$OC_2H_5$ | 40 °C | A | 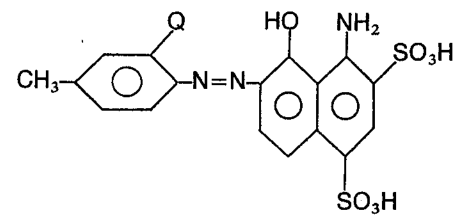 |

| | | | | | |
|---|---|---|---|---|---|
| 13 | 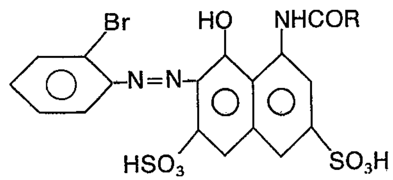<br>R = $CH_3$ oder $C_6H_5$ | Z=OH<br>X=Y=$OC_2H_5$ | 40 °C | A | 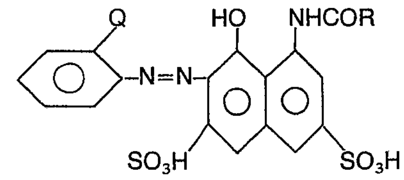 |
| 14 | 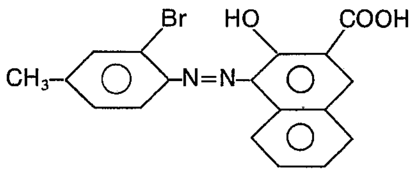 | Z=OH<br>X=Y=$OC_2H_5$ | 40 °C | A | 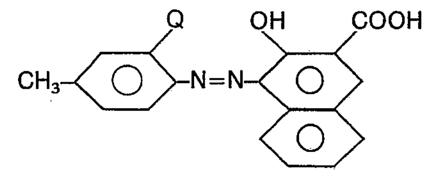 |
| 15 | 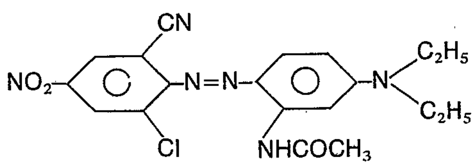 | Z=OH<br>X=Y=$OC_2H_5$ | 100 °C | B | 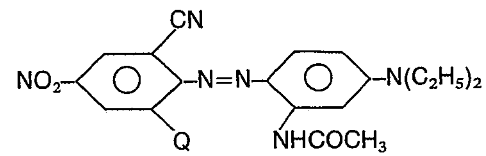 |
| 16 | 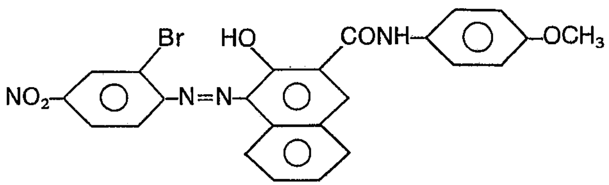 | Z=OH<br>X=Y=$OCH_5$ | 60 °C | B | 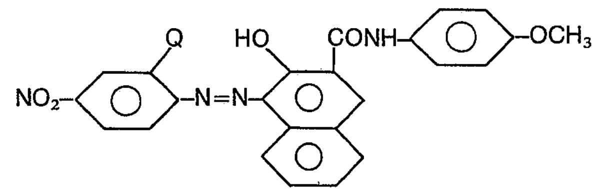 |
| 17 | 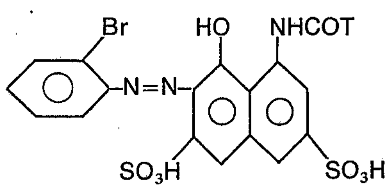<br>T = $CH_3$ oder $C_6H_5$ | X=Y=Z=<br>O–i–$C_3H_7$ | 80 °C | A | 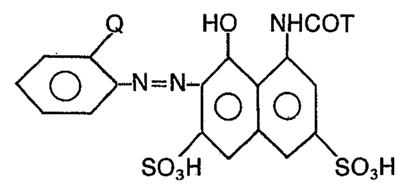 |

Tabelle (Fortsetzung)

| Halogen-Verbindung | | Phosphorverbindung der Formel Z–PXY | Reaktionstemperatur | Methode | Reaktionsprodukt 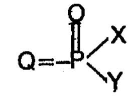 |
|---|---|---|---|---|---|
| 18 | 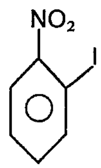 | Z=OH<br>X=Y=$OC_2H_5$ | 60 °C | B | 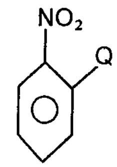 |
| 19 | 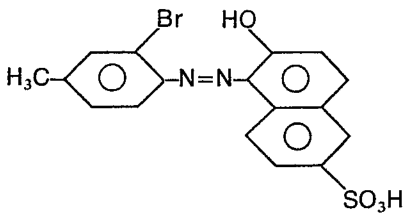 | Y=Z=$OC_2H_5$<br>X=$OC_6H_5$ | 80 °C | A | 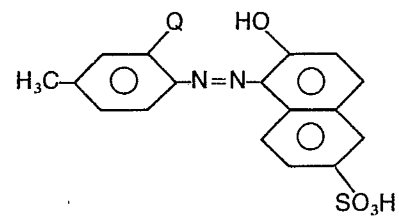 |
| 20 | 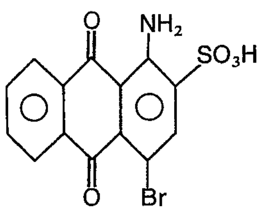 | Z=OH<br>X=Y=$OC_2H_5$ | 80 °C | A | 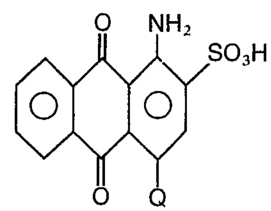 |
| 21 | 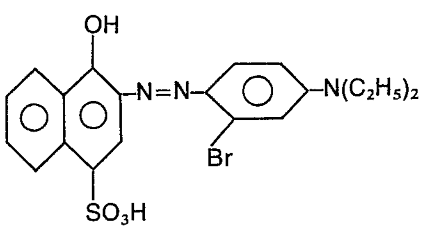 | Z=OH<br>X=Y=$OC_2H_5$ | 90 °C | A | 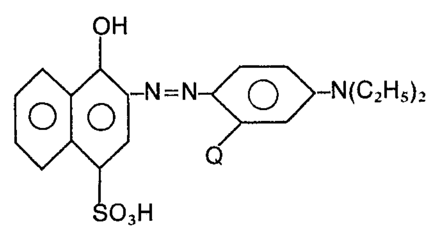 |

**Patentansprüche**

1. Verfahren zur Herstellung von phosphorhaltigen Verbindungen der Formel

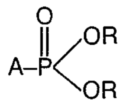

(I)

durch Umsetzung von Phosphorverbindungen der Formel

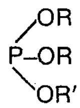

(II)

mit aktivierten aromatischen Halogenverbindungen der Formel

A–Hal (III)

in Gegenwart von Kupferverbindungen, wobei
A für einen durch Substituenten mit positiven Hammet'schen $\sigma$-para-Werten substituierten aromatischen Rest,
Hal für Halogen,
R'für H oder R und
R für einen gegebenenfalls substituierten Alkyl-, Cyclohexyl- oder Phenylrest stehen,
dadurch gekennzeichnet, dass man die Reaktion in Wasser bei pH 6–9 in Gegenwart von Kupfer-II-salzen durchführt.

2. Verfahren nach Anspruch 1, dadurch gekennzeichnet, dass man als Halogenverbindungen ortho-Halogenazofarbstoffe einsetzt.

3. Verfahren nach Anspruch 1, dadurch gekennzeichnet, dass man die Reaktion ausserdem in Gegenwart von tertiären Aminen durchführt.

4. Verfahren nach Anspruch 1, dadurch gekennzeichnet, dass man die Reaktion ausserdem in Gegenwart von Emulgatoren und/oder Phasentransferkatalysatoren durchführt.

**Claims**

1. A process for the production of phosphorus-containing compounds corresponding to the following formula

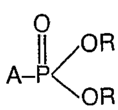

(I)

by reacting phosphorus compounds corresponding to the following formula

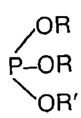

(II)

with activated aromatic halogen compounds corresponding to the following formula

A–Hal (III)

in the presence of copper compounds; in the above formulae,
A represents an aromatic radical substituted by substituents having positive Hammet $\sigma$-para-values,
Hal represents halogen,
R' represents H or R and
R represents an optionally substituted alkyl, cyclohexyl or phenyl radical,
characterised in that the reaction is carried out in water at pH 6–9 in the presence of copper(II) salts.

2. A process as claimed in Claim 1, characterised in that ortho-halogen azo dyes are used as the halogen compounds.

3. A process as claimed in Claim 1, characterised in that the reaction is carried out in the additional presence of tertiary amines.

4. A process as claimed in Claim 1, characterised in that the reaction is carried out in the additional presence of emulsifiers and/or phase transfer catalysts.

**Revendications**

1. Procédé de production de composés contenant du phosphore de formule:

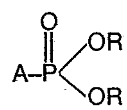

(I)

par réaction de composés phosphorés de formule:

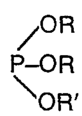

(II)

avec des composés halogénés aromatiques activés de formule:

A–Hal (III)

en présence de composés de cuivre, où
A est un reste aromatique substitué par des substituants à valeurs para $\sigma$ de Hammet positives,
Hal est un halogène,
R' représente H ou R et
R est un reste alkyle, cyclohexyle ou phényle éventuellement substitué,
caractérisé en ce qu'on conduit la réaction dans l'eau à un pH de 6–9 en présence de sels de cuivre-II.

2. Procédé suivant la revendication 1, caractérisé en ce qu'on utilise comme composés halogénés des colorants ortho-halogénazoïques.

3. Procédé suivant la revendication 1, caractérisé en ce qu'on conduit en outre la rêaction en présence d'amines tertiaires.

4. Procédé suivant la revendication 1, caractérisé en ce qu'on conduit en outre la réaction en présence d'émulsionnants et/ou de catalyseurs de transfert de phase.